# EUROPÄISCHE PATENTSCHRIFT

(11) **EP 0 737 348 B1**
(45) Veröffentlichungstag und Bekanntmachung des Hinweises auf die Patenterteilung: **29.04.1998**
(21) Anmeldenummer: 95903708.6
(22) Anmeldetag: 29.12.1994
(51) Int. Cl.: G09F 9/33

(54) **ANZEIGEVORRICHTUNG**
DISPLAY DEVICE
DISPOSITIF D'AFFICHAGE

(30) Priorität: 30.12.1993 AT 2652/93
(43) Veröffentlichungstag der Anmeldung: 16.10.1996
(73) Patentinhaber: Rosenitsch, Harald, 1130 Wien (AT)
(72) Erfinder: Rosenitsch, Harald, 1130 Wien (AT)
(74) Vertreter: Rippel, Andreas, Dipl.-Ing.
(86) Internationale Anmeldenummer: AT9400209
(87) Internationale Veröffentlichungsnummer: WO9518435

(56) Entgegenhaltungen:
- EP-A- 0 303 741
- EP-A- 0 400 176
- FR-A- 2 434 447

## Beschreibung

Die Erfindung bezieht sich auf eine Anzeigevorrichtung mit einem Rasterkörper, in dem eine Mehrzahl von Reflektoren ausgebildet ist, in denen eine elektrisch erregbare Lichtquelle angeordnet ist, wobei jeder Reflektor durch eine linsenförmige Streuscheibe abgedeckt ist und an seinem der Lichtquelle gegenüber liegenden Ende eine lichtdichte Fassung für die einzelnen Streuscheiben aufweist.

Bei einer aus der EP 0 303 741 A1 bekannten Anzeigevorrichtung dieser Art wird die Rasterung durch gleichmäßig nebeneinander angeordnete Reflektoren gebildet, die mit je einer mittig angeordneten Lichtquelle versehen sind.

Dadurch ist nur eine beschränkte Darstellung von Zeichen möglich.

Die Erfindung hat es sich insbesondere zum Ziel gesetzt, eine Anzeigevorrichtung zu schaffen, bei der die angezeigten Zeichengruppen besser lesbar sind. Erreicht wird dies dadurch, daß die Rasterung des Rasterkörpers durch Rechtecke, vorzugsweise Quadrate gebildet, deren jedes durch mindestens eine Diagonale in Dreiecke geteilt wird, wobei jedes Dreieck das durch eine Streuscheibe abgedeckte Ende eines mit wenigstens einer Lichtquelle versehenen Reflektors bildet.

Die Lesbarkeit der angezeigten Zeichengruppen wird dadurch weiters gesteigert, daß die Streuscheiben eine gegen die Lichtquellen weisende linsenförmige Wölbung besitzen.

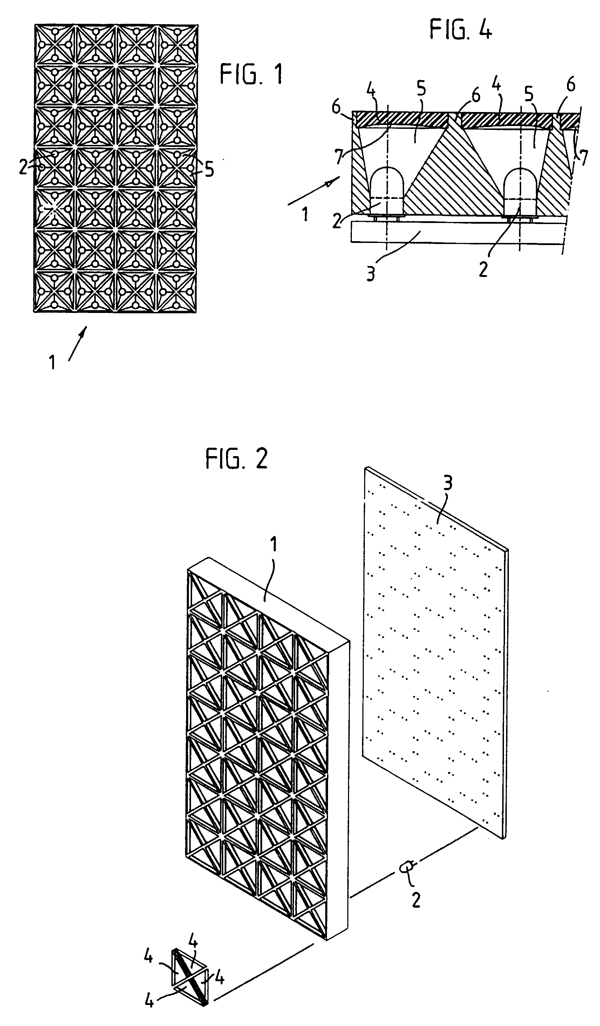

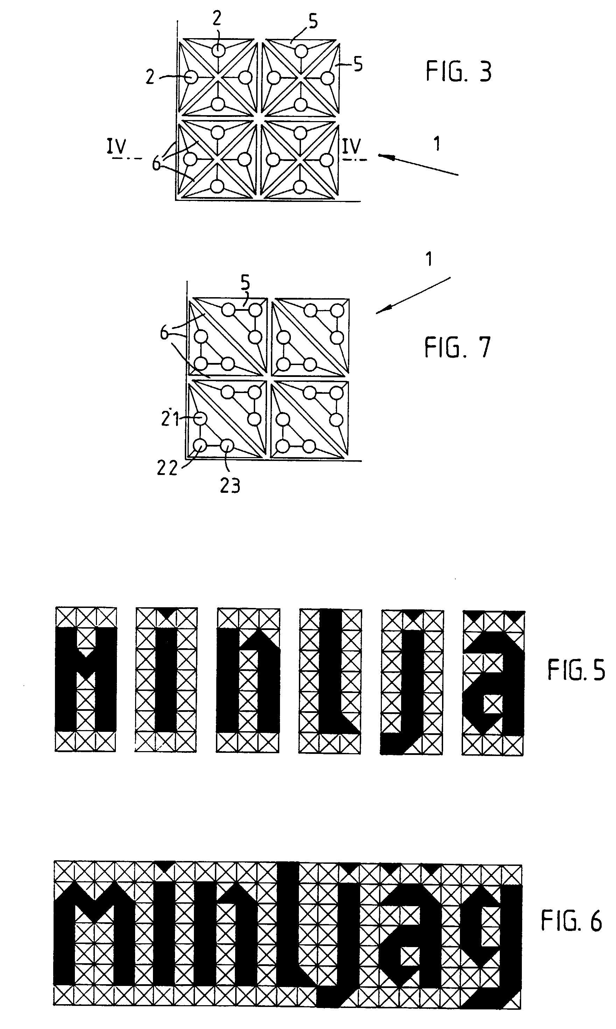

Nachstehend ist die Erfindung anhand von in den Zeichnungen dargestellten Ausführungsbeispielen beschrieben. Dabei zeigen: Fig. 1 eine Draufsicht auf eine erfindungsgemäße Anzeigevorrichtung; Fig. 2 eine schaubildliche Darstellung der Anzeigevorrichtung nach Fig. 1 mit auseinander gezogenen Einzelteilen; Fig. 3 eine vergrößerte Darstellung eines Teiles der Anzeigevorrichtung nach Fig. 1; Fig. 4 einen Schnitt nach der Linie IV-IV in Fig. 3; Fig. 5 als Beispiel eine Anzeige mit einer bisher üblichen Anzeigevorrichtung; Fig. 6 eine Anzeige mit einer erfindungsgemäßen Anzeigevorrichtung unter Verwendung einer Proportionalschrift; Fig. 7 in einer der Fig. 3 ähnlichen Darstellung eine weitere Ausführungsform der Erfindung.

Gemäß den Fig. 1 bis 4 besteht eine Anzeigevorrichtung im wesentlichen aus einem Rasterkörper 1, Lichtquellen 2, die auf einer Vorrichtung 3 zur -Zufuhr von elektrischem Strom, z.B. einer Printplatte befestigt sind, und linsenförmigen Streuscheiben 4. Die Rasterung des Rasterkörpers 1 wird im gezeichneten Ausführungsbeispiel durch Quadrate gebildet, deren jedes durch zwei Diagonalen in vier Dreiecke geteilt wird. Es entstehen dadurch in Draufsicht dreieckförmige Gebilde, deren sich nach innen zu erstreckende Wände als pyramidenförmige Reflektoren 5 ausgebildet sind, wobei im Bereich der jeweiligen Pyramidenspitze je eine Lichtquelle 2 sitzt.

An seinem der Lichtquelle 2 gegenüber liegenden Ende bildet jeder Reflektor 5 eine lichtdichte Fassung 6 für die jeweilige Streuscheibe 4.

Die Streuscheiben 4 sind in den Rasterkörper 1, bzw. in die jeweils vorgesehenen Fassungen 6 eingepreßt. Die die Fassungen bildenden, dünnen, etwa 0,5 mm starken lichtdichten Stege zwischen den angrenzenden Streuscheiben 4 verhindern die Überstrahlung der Streuscheiben an den Kanten. Für eine gleichmäßige Lichtverteilung sind die Streuscheiben 4 an ihren gegen die Lichtquellen 2 weisenden Flächen mit linsenförmigen Wölbungen 7 versehen.

Durch die erfindungsgemäße Ausbildung wird ein "LCD-Effekt" erreicht, ohne daß die Nachteile der üblichen LCD-Anzeigen auftreten. Die Aufteilung einer in den Abmaßen frei wählbaren Schriftfläche in viele Rasterpunkte ermöglicht die Darstellung aller Schriftzeichen und auch die Darstellung von Laufschriften ist möglich. Als weiterer wesentlicher Vorteil des erfindungsgemäßen Systems ist die Möglichkeit der freien Beschriftung über die komplette Schriftfläche (z.B. zehn Zeichen 200 mm hoch oder zwei Zeilen mit mindestens zwanzig Zeichen 90 mm hoch) hervorzuheben. Auch Proportionalschriften sind darstellbar, wie anhand der Fig. 6 gezeigt wird.

Bei einem Vergleich der Fig. 5 und Fig. 6 ergibt sich der Vorteil der erfindungsgemäßen Anordnung gegenüber der bisher üblichen LCD-Technik. Fig. 5 zeigt die bisher übliche Aufteilung von LCD-Gläsern mit den für die Leiterbahnen notwendigen Mittelstegen. Demgegenüber ist in Fig. 6 eine erfindungsgemäße Anzeige dargestellt, wobei eine Proportionalschrift verwendet werden kann.

In Fig. 7 ist ein weiteres Ausführungsbeispiel der Erfindung dargestellt, wobei die Quadrate nur durch eine Diagonale in zwei Dreiecke unterteilt sind und in dem entstandenen pyramidenförmigen Reflektor drei Lichtquellen 21, 22 und 23 angeordnet sind, die verschiedenfarbig ausgebildet sein können.

## Patentansprüche

1. Anzeigevorrichtung mit einem Rasterkörper (1), in dem eine Mehrzahl von Reflektoren (5) ausgebildet ist, in denen eine elektrisch erregbare Lichtquelle (2) angeordnet ist, wobei jeder Reflektor (5) durch eine linsenförmige Streuscheibe (4) abgedeckt ist und an seinem der Lichtquelle (2) gegenüber liegenden Ende eine lichtdichte Fassung (6) für die einzelnen Streuscheiben (4) aufweist, **dadurch gekennzeichnet,** daß die Rasterung des Rasterkörpers (1) durch Rechtecke, vorzugsweise Quadrate gebildet wird, deren jedes durch mindestens eine Diagonale in Dreiecke geteilt wird, wobei jedes Dreieck das durch eine Streuscheibe (4) abgedeckte Ende eines mit wenigstens einer Lichtquelle (2;21,22,23) versehenen Reflektors (5) bildet.

2. Anzeigevorrichtung nach Anspruch 1, **dadurch gekennzeichnet,** daß die Streuscheiben (4) eine gegen die Lichtquellen (2) weisende linsenförmige Wölbung (7) besitzt.

## Claims

1. Display device with a screen member (1) in which there is formed a plurality of reflectors (5) in which there is disposed an electrically-energisable light-source (2), each reflector (5) being covered by a lens-shaped diffusing disc (4) and, at its end opposite the light-source (2), has a light-proof setting (6) for the individual diffusing discs (4), **characterised in that** the screen configuration of the screen member (1) is formed by rectangles, preferably squares, each being subdivided by at least one diagonal into triangles, each triangle forming the end, covered by a diffusing disc (4), of a reflector (5) provided with at least one light-source (2; 21, 22, 23).

2. Display device according to claim 1, **characterised in that** the diffusing discs (4) have a lens-shaped concavity (7) in the direction of the light-sources (2).

## Revendications

1. Dispositif d'affichage comprenant une grille (1) dans laquelle est prévue une multiplicité de réflecteurs (5) dans lesquels est placée une source lumineuse (2) excitable électriquement, chaque réflecteur (5) étant recouvert d'un diffuseur (4) lenticulaire et présentant, à son extrémité opposée à la source lumineuse (2), une monture (6) étanche à la lumière, pour les différents diffuseurs (4), caractérisé en ce que le tramage de la grille (1) est constitué de quadrilatères rectangles, de préférence des carrés, dont chacun est divisé en triangles par au moins une diagonale, chaque triangle formant l'extrémité d'un réflecteur (5) doté d'au moins une source lumineuse (2; 21, 22, 23), extrémité que recouvre un diffuseur (4).

2. Dispositif d'affichage selon la revendication 1, caractérisé en ce que les diffuseurs (4) présentent une concavité lenticulaire (7) dirigée à l'opposé des sources lumineuses (2).
